# EUROPEAN PATENT SPECIFICATION

(11) **EP 2 067 829 B1**
(45) Date of publication and mention of the grant of the patent: **02.03.2011**
(21) Application number: 08291092.8
(22) Date of filing: 20.11.2008
(51) Int. Cl.: C09D 11/00

(54) **Inkjet ink**
Tintenstrahltinte
Encre à jet d'encre

(30) Priority: 03.12.2007 JP 2007311944
(43) Date of publication of application: 10.06.2009
(73) Proprietor: Mimaki Engineering Co., Ltd., Tomi-shi, Nagano 389-0512 (JP)
(72) Inventor: Shikata, Yoshiaki, Tomi-shi, Nagano 389-0512 (JP); Hatakeyama, Nami, Tomi-shi, Nagano 389-0512 (JP); Tabayashi, Isao, Tomi-shi, Nagano 389-0512 (JP)
(74) Representative: Uchida, Kenji

(56) References cited:
- WO-A-91/17302
- WO-A-2006/134924
- WO-A-2007/108382

## Description

The present invention relates to an ink for inkjet printing.

As inkjet recording methods, there have been proposed, for example, a method of utilizing electrostatic attraction to eject ink droplets (so·called electric-field control method), a method of utilizing vibration pressure of a piezoelectric element to eject ink droplets (so-called drop-on-demand method (pressure pulse method)), and a method of utilizing pressure which is generated by forming and developing air bubbles with high temperature (so-called thermal inkjet method). These methods allow extremely high-definition images to be obtained.

Typically used in these inkjet recording methods are water·based inks using water as the main solvent and oil-based inks using organic solvent as the main solvent. Generally, image printed using a water-based ink has poor water resistance, while oil-based ink can provide image having excellent water resistance.

Various inkjet inks have been developed and used. For example, there is known an inkjet ink using vinyl chloride-vinyl acetate copolymer resin (hereinafter, referred to as "VCVAC resin") (for example, Patent document WO2004/007626). WO 2007/108382 discloses an oil-based ink comprising a colorant, VCVAC resin, an alcohol amine and an organic solvent.

It is an object of the present invention to improve characteristics of inkjet ink using VCVAC resin.

Inventers of the present invention found that inkjet inks using VCVAC resin have a problem. That is, as the VCVAC resin in the ink is degraded with age, the viscosity thereof is increased (the ink is thicken) so as to cause decrease in ejection stability of an inkjet printer and decrease in performance such as abrasion quality, drying property so that it is difficult to maintain the stable performance of inkjet ink.
As a result of development of ink capable of maintaining the stable performance of for inkjet ink using VCVAC resin, the inventers of the present invention found that by adding "a stabilizer capable of preventing the VCVAC resin in the inkjet ink from being degraded" (solving means), the VCVAC resin can be prevented from being degraded with age, thereby maintaining stably the performance of the inkjet ink (for example, the ejection stability, the abrasion quality, and the drying property) and thus resulted in the present invention.

According to the present invention, there is provided an inkjet ink containing a colorant and using vinyl chloride-vinyl acetate copolymer resin, wherein a stabilizer for preventing said vinyl chloride-vinyl acetate copolymer resin in the inkjet ink from being degraded with age is added.
Preferably, the stabilizer is an organotin stabilizer.
It is preferable that the stabilizer is a combination of an organotin stabilizer and an epoxy-modified vegetable oil plasticizer.
Preferably, the inkjet ink also contains a solvent of one or a mixture of two of solvents represented by the following general formulas as a solvent for dissolving said vinyl chloride-vinyl acetate copolymer resin 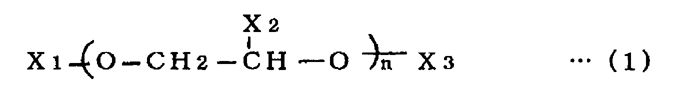 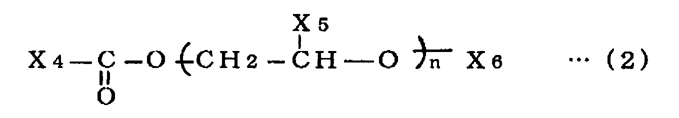 in the above formulas (1), (2), each of X₁ through X₆ is H or an alkyl group.

Preferably, the inkjet ink comprises a solvent, a colorant and vinyl chloride-vinyl acetate copolymer resin. A stabilizer which is a combination of an organotin and an epoxy-modified vegetable oil plasticizer is further added for preventing the vinyl chloride-vinyl acetate copolymer resin in the inkjet ink from being degraded with age.

It is preferable that the solvent is one or a mixture of two of solvents selected froma first group consisting of polyoxyethylene alkyl ethers such as diethylene glycol monohexyl ether, diethylene glycol hexylether, dipropylene glycol dimethyl ether, diethylene glycol diethyl ether, and a second group consisting of polyoxyethylene alkyl ether acetates such as propylene glycol monomethyl ether acetate, dipropylene glycol (mono)methyl ether acetate, and ethylene glycol monobuthyl ether acetate as a solvent for dissolving the vinyl chloride-vinyl acetate copolymer resin.

The present invention has the following arrangements.
(Arrangement 1) An inkjet ink containing a colorant and using vinyl chloride-vinyl acetate copolymer resin, wherein a stabilizer for preventing said vinyl chloride·vinyl acetate copolymer resin in the inkjet ink from being degraded with age is added.
(Arrangement 2) An inkjet ink as described in the arrangement 1, wherein said stabilizer is an organotin stabilizer.
(Arrangement 3) An inkjet ink as described in the arrangement 2,wherein said stabilizer is a combination of an organotin stabilizer and an epoxy-modified vegetable oil plasticizer.
(Arrangement 4) An inkjet ink as described in the arrangement 3, wherein said inkjet ink contains a solvent of one or a mixture of two of solvents represented by the following general formulas as a solvent for dissolving said vinyl chloride-vinyl acetate copolymer resin 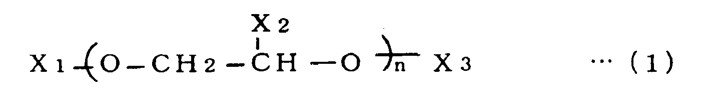 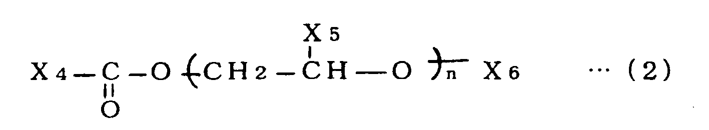 in the above formulas (1), (2), each of X₁ through X₆ is H or an alkyl group.

According to the present invention, as for an inkjet ink using a VCVAC resin, the VCVAC resin can be prevented from being degraded by adding "a stabilizer capable of preventing the VCVAC resin in the inkjet ink from being degraded with age". This allows the performance of the inkjet ink (for example, the ejection stability, the abrasion quality, and the drying property) to be stably maintained.

Hereinafter, the present invention will be described.
An inkjet ink of the present invention is an inkjet ink containing a colorant and using a vinyl chloride-vinyl acetate copolymer resin and is characterized in that a stabilizer for preventing said vinyl chloride·vinyl acetate copolymer resin from being degraded with age is added (Arrangement 1).
In the inkjet ink using vinyl chloride·vinyl acetate copolymer resin (hereinafter, referred to as "VCVAC resin"), the present invention is characterized in that the VCVAC resin can be prevented from being degraded by adding "a stabilizer for preventing the VCVAC resin from being degraded with age" (hereinafter, referred to as "predetermined stabilizer"). The prevention of degradation of the VCVAC resin prevents increase in viscosity, thus preventing decrease in ejection stability of an inkjet printer. In addition, the prevention of degradation of the VCVAC resin prevents decrease in abrasion quality and drying property. Therefore, in the present invention, it is possible to stably maintain the performance of inkjet ink (for example, ejection stability, abrasion quality, and drying property).
In the present invention, if the VCVAC resin can not be prevented from being degraded regardless of the kind of the stabilizer and regardless of whether the stabilizer is added or not, it is impossible to stably maintain the performance of inkjet ink (for example, ejection stability, abrasion quality, and drying property).
Therefore, in the inkjet ink of the present invention, it is preferable that the aforementioned predetermined stabilizer and its additive amount are such a stabilizer and an additive amount that the function of preventing the degradation of the VCVAC resin and the function of thereby preventing the increase in viscosity can be substantially recognized. For example, the stabilizer and its additive amount having the aforementioned effective functions are preferably a stabilizer and its additive amount capable of controlling the increase in viscosity with age (viscosity changing rate) to be 10% or less.

In the present invention, it is preferable that said stabilizer is an organotin stabilizer (Arrangement 2).
This is because organotin stabilizers excel in function of preventing the degradation of the VCVAC resin and function of thereby preventing the increase in viscosity.
Examples of the organotin stabilizer include a butyltin stabilizer, an octyltin stabilizer, a methyltin stabilizer, a laurate stabilizer, a maleate stabilizer, and a mercapto stabilizer.

In the present invention, it is preferable that said stabilizer is a combination of an organotin stabilizer and an epoxy·modified vegetable oil plasticizer (Arrangement 3).
The stabilizer, i.e. a combination of an organotin stabilizer and an epoxy-modified vegetable oil plasticizer, very excels in function of preventing the degradation of the VCVAC resin and function of thereby preventing the increase in viscosity.
Examples of the stabilizer as a combination of an organotin stabilizer and an epoxy-modified vegetable oil plasticizer include ADK CIZER O·series available from ADEKA Corporation, #8102 and #8831 available from Nitto Kasei Co., Ltd, ADK STAB 465E and ADK STAB OT-1 available from ADEKA Corporation, and EMBILIZER available from Tokyo Fine Chemical CO.,LTD.

The present invention can be suitably adapted to an inkjet ink as a solvent/oil·based ink containing a solvent and vinyl chloride-vinyl acetate copolymer resin. For example, the present invention can be suitably adapted to an inkjet ink as a solvent/oil·based ink containing vinyl chloride-vinyl acetate copolymer resin as a binder resin.

In the present invention, examples of the vinyl chloride-vinyl acetate copolymer resin include VYNS-3, VYHH, VYHD, VMCH, VMCC, VMCA, VERR-40, VAGH, VAGD, VAGF, and VROH manufactured by The Dow Chemical Company, SOLBIN C, SOLBIN CL, SOLBIN CH, SOLBIN CN, SOLBIN C5, SOLBIN C5R, SOLBIN M, SOLBIN ML, SOLBIN TA5R, SOLBIN TAO, SOLBIN MK6, SOLBIN TA2 and so on manufactured by Nisshin Chemical Industry, Co., Ltd.

In the present invention, it is preferable to use a solvent of one or a mixture of two of solvents represented by the following general formulas as the solvent for dissolving the aforementioned vinyl chloride-vinyl acetate copolymer resin (Arrangement 4).
This is because these have good properties with less erosion of the head member and erosion of media as compared to the case using another solvent. 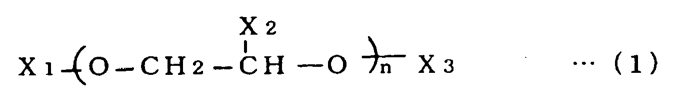 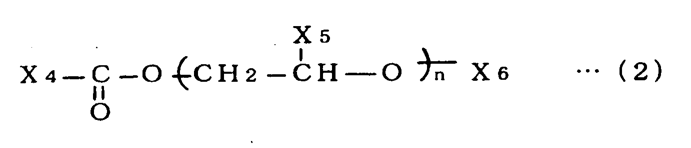 In the above formulas (1), (2), each of X₁ through X₆ is H or an alkyl group.

In the present invention, solvents represented by the above formula (1) include polyoxyethylene alkyl ethers such as diethylene glycol monohexyl ether (for example, trade name: Hexyldiglycol (HeDG) available from Nippon Nyukazai Co., Ltd.), diethylene glycol hexylether, dipropylene glycol dimethyl ether (for example, trade name: dimethyl propylene glycol (DMFDG) available from Nippon Nyukazai Co., Ltd.), diethylene glycol diethyl ether (for example, trade name: diethyl digrycol (DEDG) available from Nippon Nyukazai Co., Ltd.).
In the present invention, solvents represented by the above formula (2) include polyoxyethylene alkyl ether acetates such as propylene glycol monomethyl ether acetate (abbr. PMA), dipropylene glycol (mono)methyl ether acetate (dipropylene glycol monomethyl ether monomethyl acetate) (abbr. DPMA), and ethylene glycol monobuthyl ether acetate (abbr. BMGAC).

The oil-based inkjet ink of the present invention preferably contains a colorant and a binder resin which are suitably dissolved or dispersed in the solvent together with the dispersant (for example, see Patent document W02004/007626).
As a method of producing the oil-based inkjet ink, a solvent or a mixed solvent is prepared as the solvent of ink composition. A pigment and a dispersant are added into a part of the solvent and are mixed and dispersed by a ball mill, a bead mill, an ultrasonic mill, or a jet mill so as to obtain a pigment dispersed liquid. The residual of the aforementioned solvent, a binder resin, and other additives are added into the obtained pigment dispersed liquid while being stirred, thereby producing the ink composition.
In the aforementioned ink composition, the binder resin is preferably vinyl chloride-vinyl acetate copolymer resin. Another binder resin of rosin series, acrylic series, polyester series, or urethane series may be used together with the vinyl chloride-vinyl acetate copolymer resin.
A stabilizer such as an oxidation inhibitor and an ultraviolet absorber, a surface acting agent may be added into the aforementioned ink composition. As the oxidation inhibitor, BHA (2,3-butlyl-4- oxyanisol), BHT (2,6-di-t-butyl-p-cresol) may be employed and its amount is of from 0.01% to 3.0% by weight relative to the oil-based ink composition. As the ultraviolet absorber, a benzophenone compound or a benzotriazole compound may be employed and its amount is of from 0.01% to 0.5% by weight relative to the oil·based ink composition.
In addition, as the surface acting agent, any of anionic, cationic, and amphoteric or nonionic surface acting agents may be employed and its amount is of from 0.5% to 4.0% by weight relative to the oil-based ink composition.

### (Examples)

Hereinafter, the present invention will be specifically described with reference to examples. However, the present invention is not limited these examples.

### (Preparation of resin solution I)

The following mixed solvent was used as the solvent.
(i) Propylene glycol monomethyl ether acetate (abbr. PMA): 45 parts by weight
(ii) Diethylene glycol monohexyl ether (trade name: Hexyldiglycol (HeDG) available from Nippon Nyukazai Co., Ltd.): 10 parts by weight
(iii) Ethylene glycol monobuthyl ether acetate (BMGAC): 45 parts by weight
Vinyl chloride·vinyl acetate copolymer resin was added into the mixed solvent obtained by mixing the aforementioned three solvents while being stirred. The resin was dissolved by a stirrer (Three-one motor available from Shinto Scientific Co., Ltd.) while being warmed at about 50°C for 1 hour by a water bath so as to obtain resin solutions I with a resin concentration of 5 wt %. As the vinyl chloride·vinyl acetate copolymer resin, SOLBIN C5R available from Nisshin Chemical Industry, Co., Ltd. or VYHD available from Dow Chemical Company was used.

### (Preparation of resin solution II)

The following additive: as a stabilizer (1) a stabilizer of epoxy·modified vegetable oil: O·130P available from ADEKA Corporation, (2) an organotin stabilizer: #8102, #8105, #8832 available from Nitto Kasei Co., Ltd, or (3) a mixture of the aforementioned (1) and (2) was added into the resin solutions I and stirred so as to obtain resin solutions II as shown in Table 1, Table 2. Similarly, the resin solution I in which no stabilizer was added as shown in Table 1 was used as comparative examples.
For observing the adverse effect due to moisture absorption, test solutions were made by adding water 2 wt % to the resin solution II in which the additive was added and the resin solution I in which no additive was added, respectively.
The additive amount of the stabilizer was 0.1 wt % in Table 1, 0.1 wt % or 0.4 wt % in Table 2 relative to the amount of the resin solution.

### (Evaluation)

After the viscosity of each resin solution II was measured by a viscometer (RE-115L available from Toki Sangyo Co., Ltd.), the resin solution II was entered in a 60°C constant-temperature bath and was left for 1 month. The viscosity was measured by using the viscometer (RE·115L available from Toki Sangyo Co., Ltd.) at the 0^{th} day (immediately after the preparation of the resin solution II), the 14^{th} day, and the 30^{th} day from the start of leaving. The results are shown in Table 1.
As results after 1 month in the 60 °C bath, as shown in Table 1 and Table 2, the changing rate in viscosity of the resin solution I in which no additive and only VCVAC resin (C5R, VYHD) was added was from 10% to 25% (comparative examples), while the changing rate in viscosity of the resin solution II in which the additive and/or water were added was 5% or less (examples). It should be noted that the test solutions "a" through "f" in Table 2 correspond to the solutions shown a lower columns (6 test solutions of VYHD).
By adding the stabilizer (O-130P, #8102, #8105, #8832) into the VCVAC resin solution (C5R, VYHD) as shown in the above, it is possible to stably maintain the viscosity of the resin solution (resin solvent).

Using inkjet inks prepared by adding colorant into the resin solutions of the examples and comparative examples, changes of performance such as ejection stability, abrasion quality, drying property in an inkjet printer with age were checked.
As a result, in case of using any of the resin solutions I of the comparative examples, it was found that the viscosity was increased (the ink is thicken) so as to cause non-ejection and deflection of ink and the VCVAC resin was degraded with age so as to cause decrease in performance such as abrasion quality and drying property. However, in case of using any of the resin solutions II of the examples, printing was conducted without problem and none of the non-ejection and deflection of ink, and the decrease in performance such as abrasion quality and drying property was observed.

**[Table 1]**

| Resin Solution | Additives | | Leaving Period (day) | | |
|---|---|---|---|---|---|
| | | | 0^{th} day | 14^{th} day | 30^{th} day |
| C5R 5% | None | Viscosity (mPa·s) | 7.02 | 8.40 | 8.61 |
| | | Changing rate (%) | 0.0 | 11.7 | 22.6 |
| | Water | Viscosity (mPa·s) | 9.27 | 9.11 | 9.18 |
| | | Changing rate (%) | 0.0 | 1.7 | 1.0 |
| | #8102 | Viscosity (mPa·s) | 8.45 | 8.38 | 8.48 |
| | | Changing rate (%) | 0.0 | -0.8 | 0.4 |
| | O·130P | Viscosity (mPa·s) | 8.48 | 8.47 | 8.64 |
| | | Changing rate (%) | 0.0 | 0.0 | 1.9 |
| | #8102 + water | Viscosity (mPa·s) | 9.24 | 9.23 | 9.38 |
| | | Changing rate (%) | 0.0 | -0.1 | 1.5 |
| | O·130P + water | Viscosity (mPa·s) | 9.24 | 9.12 | 9.18 |
| | | Changing rate (%) | 0.0 | -1.3 | -0.6 |
| VYHD 5% | None | Viscosity (mPa·s) | 7.40 | 8.02 | 8.19 |
| | | Changing rate (%) | 0.0 | 8.4 | 10.8 |
| | Water | Viscosity (mPa·s) | 9.06 | 8.68 | 8.73 |
| | | Changing rate (%) | 0.0 | -4.2 | -3.6 |
| | #8102 | Viscosity (mPa·s) | 8.21 | 7.96 | 8.08 |
| | | Changing rate (%) | 0.0 | -3.0 | -1.5 |
| | O·130P | Viscosity (mPa·s) | 8.19 | 7.93 | 8.09 |
| | | Changing rate (%) | 0.0 | -3.2 | -1.3 |
| | #8102 + water | Viscosity (mPa·s) | 9.06 | 8.75 | 8.71 |
| | | Changing rate (%) | 0.0 | -3.4 | -3.8 |
| | O·130P + water | Viscosity (mPa·s) | 8.91 | 8.56 | 8.58 |
| | | Changing rate (%) | 0.0 | -4.0 | -3.7 |

**[Table 2]**

| Resin: VYHD 5% | | | | | | | | | |
|---|---|---|---|---|---|---|---|---|---|
| Solvent: PMA, BMGAC, HeDG | | | | | | | | | |
| Stabilizer: #8105, #8832, O·130P | | | | | | | | | |
| | | | | | | | | | |
| Viscosity Measurement | | | | | | | | | |
| Additive amount [%] | | | | | | | 0 | 14 | 30 |
| | #8102 | #8105 | #8832 | O130P | Water | | | | |
| a no additive | | | | | | Data (mPa·s) | 7.40 | 8.02 | 8.19 |
| | | | | | | Changing rate (%) | 0.0 | 8.4 | 10.7 |
| b no additive + water | | | | | 2* | Data (mPa·s) | 9.06 | 8.68 | 8.73 |
| | | | | | | Changing rate (%) | 0.0 | -4.2 | -3.6 |
| c | 0.1 | | | | | Data (mPa·s) | 8.21 | 7.96 | 8.08 |
| | | | | | | Changing rate (%) | 0.0 | -3.0 | -1.6 |
| e | 0.1 | | | | 2* | Data (mPa·s) | 9.06 | 8.75 | 8.71 |
| | | | | | | Changing rate (%) | 0.0 | -3.4 | -3.9 |
| d | | | | 0.1 | | Data (mPa·s) | 8.19 | 7.93 | 8.09 |
| | | | | | | Changing rate (%) | 0.0 | -3.2 | -1.2 |
| f | | | | 0.1 | 2* | Data (mPa·s) | 8.91 | 8.56 | 8.68 |
| | | | | | | Changing rate (%) | 0.0 | -3.9 | -2.6 |
| 3 | | 0.1 | | | | Data (mPa·s) | 8.42 | 7.69 | 7.74 |
| | | | | | | Changing rate (%) | 0.0 | -8.7 | -8.1 |
| 9 | | 0.1 | | | 2* | Data (mPa·s) | 7.91 | 7.51 | 7.66 |
| | | | | | | Changing rate (%) | 0.0 | -5.0 | -3.2 |
| 4 | | 0.1 | | 0.4 | | Data (mPa·s) | 8.58 | 8.04 | 8.12 |
| | | | | | | Changing rate (%) | 0.0 | -6.3 | -5.3 |
| 10 | | 0.1 | | 0.4 | 2* | Data (mPa·s) | 8.24 | 7.97 | 8.17 |
| | | | | | | Changing rate (%) | 0.0 | -3.3 | -0.9 |
| 5 | | | 0.1 | | | Data (mPa·s) | 8.62 | 8.04 | 8.17 |
| | | | | | | Changing rate (%) | 0.0 | -6.7 | -5.2 |
| 11 | | | 0.1 | | 2* | Data (mPa·s) | 7.86 | 7.46 | 7.52 |
| | | | | | | Changing rate (%) | 0.0 | -5.0 | -4.3 |
| 6 | | | 0.1 | 0.4 | | Data (mPa·s) | 8.34 | 7.84 | 7.94 |
| | | | | | | Changing rate (%) | 0.0 | -6.0 | -4.7 |
| 12 | | | 0.1 | 0.4 | 2* | Data (mPa·s) | 8.14 | 7.76 | 7.86 |
| | | | | | | Changing rate (%) | 0.0 | -4.6 | -3.4 |

## Claims

1. An inkjet ink comprising:
a solvent
a colorant; and
vinyl chloride-vinyl acetate copolymer resin,
wherein a stabilizer which is a combination of an organotin and an epoxy-modified vegetable oil plasticizer is added for preventing said vinyl chloride-vinyl acetate copolymer resin in the inkjet ink from being degraded with age.

2. An inkjet ink according to claim 1, wherein said solvent is one or a mixture of two of solvents selected from:
a first group consisting of polyoxyethylene alkyl ethers such as diethylene glycol monohexyl ether, diethylene glycol hexylether, dipropylene glycol dimethyl ether, diethylene glycol diethyl ether; and
a second group consisting of polyoxyethylene alkyl ether acetates such as propylene glycol monomethyl ether acetate, dipropylene glycol (mono)methyl ether acetate, and ethylene glycol monobuthyl ether acetate
as a solvent for dissolving said vinyl chloride·vinyl acetate copolymer resin

## Patentansprüche

1. Tintenstrahltinte, umfassend:
ein Lösungsmittel
einen Farbstoff; und
Vinylchlorid-Vinylacetat Copolymerharz,
wobei ein Stabilisator, welcher eine Kombination aus einem organischen Zinn und einem epoxymodifizierten Pflanzenöl-Weichmacher ist, hinzugefügt ist, um zu verhindern, dass das Vinylchlorid-Vinylacetat Copolymerharz in der Tintenstrahltinte mit der Zeit abgebaut wird.

2. Tintenstrahltinte nach Anspruch 1, wobei das Lösungsmittel eines oder ein Gemisch von zweien von Lösungsmitteln ist, ausgewählt aus:
einer ersten Gruppe, bestehend aus Polyoxyethylenalkylethern, wie beispielsweise Diethylenglykolmonohexylether, Diethylenglykolhexylether, Dipropylenglykoldimethylether, Diethylenglykoldiethylether; und
einer zweiten Gruppe, bestehend aus Polyoxyethylenalkyletheracetaten, wie beispielsweise Propylenglykolmonomethyletheracetat, Dipropylenglykol(mono)-methyletheracetat und Ethylenglykolmonobutyletheracetat,
als ein Lösungsmittel für das Auflösen des Vinylchlorid-Vinylacetat Copolymerharzes.

## Revendications

1. Encre pour jet d'encre comprenant :
un solvant
un colorant ; et
une résine copolymère de chlorure de vinyle-acétate de vinyle,
dans laquelle un agent stabilisant qui est une association d'un organo-étain et d'un plastifiant à base d'huile végétale modifié époxy est ajouté afin d'empêcher ladite résine copolymère de chlorure de vinyle-acétate de vinyle dans l'encre pour jet d'encre de se dégrader en vieillissant.

2. Encre pour jet d'encre selon la revendication 1, dans laquelle ledit solvant est l'un, ou un mélange, de deux solvants sélectionnés à partir :
d'un premier groupe constitué par des éthers alkyliques de polyoxyéthylène tels que l'éther monohexyl de diéthylène glycol, l'hexyléther de diéthylène glycol, l'éther diméthylique de dipropylene glycol, l'éther diéthylique de diéthylène glycol ; et
d'un deuxième groupe constitué par des acétates d'éther alkyliques de polyoxyéthylène tels que l'acétate d'éther monométhylique de propylène glycol, l'acétate d'éther monométhylique de dipropylène glycol, et l'acétate d'éther monobutylique d'éthylène glycol
en tant que solvant afin d'assurer la dissolution de ladite résine copolymère de chlorure de vinyle-acétate de vinyle.
